# EUROPEAN PATENT SPECIFICATION

(11) **EP 0 716 461 B1**
(45) Date of publication and mention of the grant of the patent: **11.03.1998**
(21) Application number: 95308592.5
(22) Date of filing: 29.11.1995
(51) Int. Cl.: H01M 2/10, H04B 1/38

(54) **Electronic Appliance housing having storage portion**
Elektronisches Apparatgehäuse mit Speicherabschnitt
Boîtier de dispositif électronique ayant un compartement de stockage

(30) Priority: 30.11.1994 JP 319406/94
(43) Date of publication of application: 12.06.1996
(73) Proprietor: NEC Corporation, Minato-ku, Tokyo 108-01 (JP)
(72) Inventor: Deguchi, Manabu, Minato-ku, Tokyo 108-01 (JP)
(74) Representative: Abnett, Richard Charles

(56) References cited:
- EP-A- 0 367 608

## Description

The present invention relates generally to the structure of the housing of an electronic appliance. More specifically, the present invention is directed to the structure of a detachable cover used to close a storage portion of a housing, used for storing an electronic part such as a battery.

In portable telephones, radio paging receivers and other electronic appliances, compartments for storing electric batteries or cells are formed in the housings. Batteries are mounted in the battery storage portion, and an opening for this battery storage portion is covered by a cover.

When the battery is taken out from the housing, the cover is removed from the housing, and the cover is reattached after the battery is re-inserted. Since the battery is replaced at a certain frequency, it is required that the cover can be simply detached from the housing. A locking mechanism is normally provided in order that the cover, when attached, does not fall off the housing. The locking mechanism is constructed of, for example, a locking groove provided at the housing side, and a locking piece engaging with this locking groove and mounted on the cover. For instance, Japanese Laid-Open Patent No. Hei 1-260757 discloses a technique for preventing the cover from falling off by employing such a locking piece.

However, since the component space within the conventional housing structure is limited, it is rather difficult to define a sufficiently large space to accommodate the locking piece. As a consequence, both the locking piece and the portion for operating it are necessarily made compact, so that the operability of the locking piece is poorer. Therefore, a strong force cannot easily be applied to the locking piece, so that the operations of removing and replacing the cover become difficult.

In particular, when the locking mechanism is to be released from the condition in which the locking piece is fitted into the locking groove, in order to remove the cover mounted on the opening, the locking piece cannot be smoothly slid along to the lock-released condition. This is because contact friction is produced between the locking piece and the locking groove.

If a space (or 'play') were made between the locking piece and the locking groove when the cover is mounted on the housing, then the cover cannot be sufficiently fixed, and as a result, when the housing itself is vibrated, the cover would also vibrate.

The present invention is defined in claim 1 below, to which reference should now be made. Advantageous features of the invention are set forth in the appendant claims.

A preferred embodiment of the invention is described in more detail below and takes the form of an electronic appliance housing which is constructed with a cover having a locking groove, and an operation portion with a locking portion which engages this locking groove, and a housing with a portion mounting the operation portion and a cover mounting portion to which the cover is attached. The cover is slidably mounted on the housing. The locking groove of the cover and/or the locking portion have portions which are inclined with respect to the cover in this structure. The operation portion has a portion which is slidable along a direction perpendicular to the sliding direction of the cover. With the aid of this sliding portion, the locking portion is slidably entered into and removed from the locking groove. When the locking portion is fitted into the locking groove with the cover mounted on the housing, the cover is fixed so as not to be able to fall off. As possible sectional shapes of the above-explained locking groove and locking portion, parallelogram shapes may be employed.

Furthermore, the operation portion has a structure such that this operation portion is moveable downwardly in response to the depression of the housing applied from the upper direction. The operation portion is mounted on a mounting portion of the housing which is elastically deformable, so that the operation portion can be moved downwardly, that is, in the direction perpendicular to the directions of sliding of the cover and of the locking portion. When the operation portion is depressed downwardly, the locking portion engaging the locking groove of the cover is also moved to a lower position. It should be noted that since a leaf spring or a coil spring may be arranged between the operation portion and the housing, the operation portion may be moved downwardly by depression against the spring.

When the locking piece in the locking state is moved downwardly by depressing the operation portion, a wedge or cam effect is produced by an abutment force exerted between the locking portion and an inclined edge located opposite in the locking groove. Only one of these engaging surfaces need be inclined. The cover is slid along the removal direction in response to the force produced by this wedge effect. As a consequence, when the cover is removed, the cover can be simply taken out from the housing without the need for sliding operation of the locking piece. Therefore, even when the locking piece is made compact, the operability thereof does not suffer.

Moreover, in the electronic appliance housing of the above-described structure, an engaging piece and an engaging projection portion are provided respectively on the cover and the housing mount portion to retain the cover on the housing. An engaging piece is also formed at a tip portion of the cover along the sliding direction, and engages with an engaging hole formed in the housing when the cover is completely mounted on the housing. The engaging piece of the cover has a pawl. When engaged the pawl enters the engaging hole in the housing and is held by the projection portion at the housing side, and thus the cover is not liable to fall out of the housing.

A spring portion may be provided in such a manner that the cover is biased upwardly. With such a structure, the engaging piece of the cover is pressed against the engaging projection portion of the housing when the cover is mounted on the housing. As a consequence, even when vibrations are externally applied, the cover is not vibrated.

On the other hand, when the cover is removed by depression of the operation portion, the cover is also depressed downwardly as the operation portion is depressed along the lower direction, so that the pawl is automatically released from the projection portion of the engaging hole. Therefore, the pawl may be released from the housing and the cover may be slid along the removing direction by depressing the operation portion downwardly.

The present invention is described in more detail in the following detailed description taken in conjunction with the accompanying drawings, wherein:
**Figure 1** is a perspective view for showing a known housing from which the cover is removed;
**Figure 2** is a perspective view for indicating an electronic appliance housing from which the cover is removed, according to an embodiment of the present invention;
**Figure 3** is a fragmentary perspective view representing the detailed structure of a slide portion of the electronic appliance housing shown in Figure 2;
**Figure 4** shows at (a) a cross-sectional view showing the locked condition of a locking piece employed in the housing of Figure 2, and at (b) a sectional view thereof, taken along a line A-A of (a);
**Figure 5** shows at (a) a cross-sectional view indicating a lock release operation by the locking piece, and at (b) a sectional view for showing the locking release operation, taken along a line B-B of (a);
**Figure 6** shows at (a) a cross-sectional view for showing the condition of completion of the locking release operation by the locking piece, and at (b) a sectional view thereof, taken along line C-C of (a);
**Figure 7** is a perspective view representing an electronic appliance housing from which the cover is removed, according to another embodiment of the present invention; and
**Figure 8** is a cross-sectional view indicating the condition of completion of a locking release operation by a locking piece employed in the electronic appliance housing of Figure 7.

Before describing the structure of an electronic appliance housing according to the present invention, the structure of a known electronic appliance housing will now be explained for a better understanding of the present inventive idea.

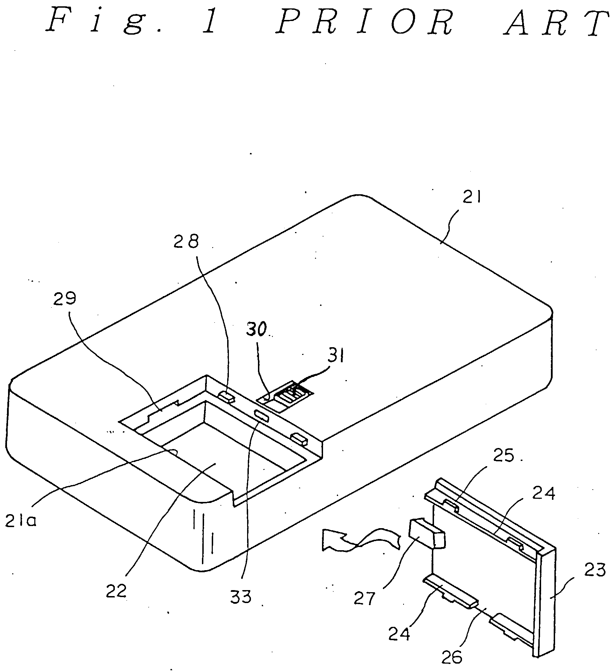

Figure 1 schematically shows the structure of an electronic appliance housing containing a known locking mechanism. In this prior art, a radio paging receiver is employed as an example. In Figure 1, a rectangular opening 21a is formed in a rear surface of a housing 21 of this radio paging receiver. As viewed into this opening 21a, a battery storage chamber 22 is defined within the housing 21.

A cover 23 used to close this opening 21a is formed in a rectangular shape whose one end portion is bent, and a rib 24 is formed in a standing condition along both side edge portions thereof. Engage pieces 25 are fabricated on the ribs 24 and project outwardly on both sides. A locking groove 26 is formed in a portion of one rib 24. Further, another engage piece 27 whose tip portion is wedge-shaped is formed on the other end portion of the cover 23.

Also, engage projection portions 28 engaged with the engage piece 25 of the cover 23 are provided at both sides of the opening 21a of the housing 21. An engage hole 29 is made in an end face of the opening 21a, and this opening 21a is covered by the above-described cover 23. Since the cover 23 is slightly slid along the longitudinal direction thereof, the engage piece 25 is engaged with the engage projection portion 28. The engage piece 27 is engaged with the engage hole 29. With this engagement, the cover 23 is held by the housing 21.

A slide groove 30 is formed in one side of the opening 21a toward a direction perpendicular to this side surface. Within this slide groove 30, a locking piece 31 is installed which can be slid along the same direction as the above-described direction.

This locking piece 31 is operable with an operation portion exposed toward the outer surface of the housing by manual manipulation. When the locking piece 31 is slid toward the opening, a locking portion 33 of the tip portion thereof is inserted into the above-described locking groove 26 of the cover 23. Thus, there is protection against the cover 23 being removed from the housing 21. Accordingly, when the locking piece 31 is manually manipulated along the reverse direction, the locking portion 33 can be withdrawn from the locking groove 26. As a result, the cover 23 can be removed from the housing 21 to thereby open the opening 21a, so that the battery may be removed and replaced.

Normally, since a compact electronic appliance is required, it is rather difficult to define a sufficiently large space to accommodate the locking piece 31. As a consequence, since the locking piece 31 and the operation portion become small, the operability of the locking piece 31 would be made poorer, and also a strong force cannot be easily applied to the locking piece 31. Thus, the operations when the cover 23 is mounted and removed become difficult.

Especially, in the known structure, when the locking arrangement is released from the condition under which the locking portion 33 is fitted into the locking groove 26 in order to remove the cover 23 mounted on the opening 21a, the locking piece 31 cannot be smoothly slid along into the lock-released condition. This is because the large slide force of the locking piece 31 is maintained due to contact friction occurring between the locking portion 33 and the locking groove 26.

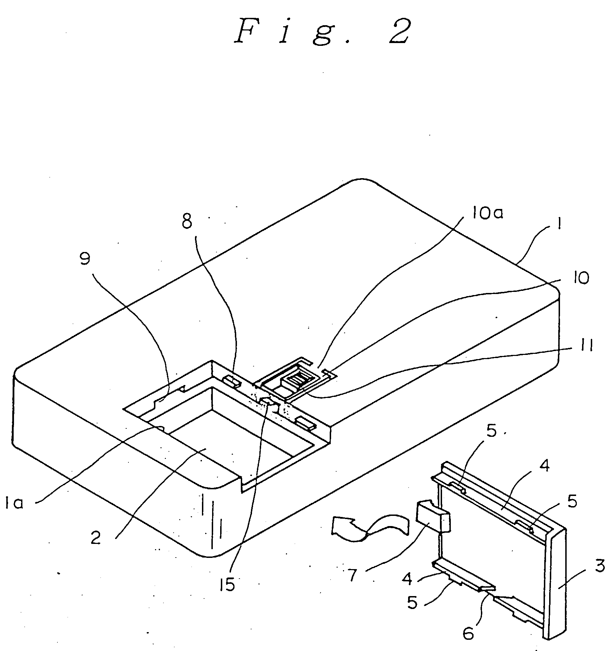

Referring now to the remaining drawings, an electronic appliance housing according to an embodiment of the present invention will be explained. Figure 2 is a perspective view showing the cover removed from the electronic appliance housing according to one embodiment of the present invention. Also, a radio paging receiver is employed as an example of this electronic appliance in this embodiment.

In Figure 2, a rectangular opening 1a is formed in a rear surface of the housing 1 of this radio paging receiver. As viewed into this opening 1a, a battery storage chamber 2 is defined within the housing 1. A cover 3 used to close this opening 1a is formed in a rectangular shape whose one end portion is bent, and a rib 4 is formed in a standing condition along both side edge portions thereof. Engage pieces 5 are fabricated on the ribs 4 and project outwardly on both sides. A locking groove 6 is formed in a portion of one rib 4. Further, another engage piece 7 whose tip portion is wedge-shaped is formed on the other end portion of the cover 3. The locking groove 6 is made of a notch having the shape of a parallelogram (as will be discussed later).

Also, engage projection portions 8 engaged with the engage piece 5 of the cover 3 are provided at both sides of the opening 1a of the housing 1. An engage hole 9 is made in an end face of the opening 1a.

When the cover 3 is put in place, the opening 1a is covered by this cover 3 and then the cover 3 is slightly slid along the longitudinal direction of the cover 3. As a result, the engage pieces 5 are engaged with the engage projection portions 8, and the engage piece 7 is engaged with the engage hole 9. With these engagements, the cover 3 is held by the housing 1.

A slide portion 10 constructed of a rectangular concave portion is formed in one side of the opening 1a along a direction perpendicular to this side surface. A locking piece 11 is slidably provided within this slide portion 10 for movement along the same direction as the above-described direction.

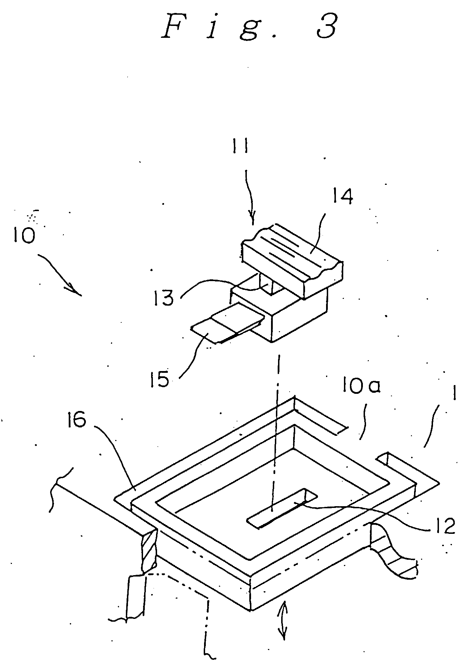

Figure 3 is a fragmentary perspective view showing the detailed structure of the slide portion 10, a portion of which is broken away. A slit 12 is opened along the slide direction in a bottom surface of the slide portion 10 formed in the housing 1. The locking piece 11 has a small piece portion 13 which penetrates through this slit 12, an operation portion 14 integrally formed on the upper portion thereof, and a locking portion 15 integrally formed on the lower portion thereof. Then, the sectional shape of the locking portion 15 is made as a parallelogram corresponding to the above-described locking groove 6. It should be understood that although the parallelogram-shaped portion is formed as a complete notch groove in this embodiment, this parallelogram-shaped portion can form only a partial groove so long as an inclined portion is provided (the notch need not extend through the whole thickness of the rib 4).

In this example, the slide portion 10 formed in the housing 1 has a notch slit 16 formed along both sides of this slide portion 10. As a result of this slit 16, the slide portion 10 is supported at one edge portion 10a with respect to the rest of the housing 1. While this supported edge portion 10a is used as a fulcrum, elastic deformation can be achieved along the thickness direction of the housing 1, namely, the upper/lower direction of Figure 3.

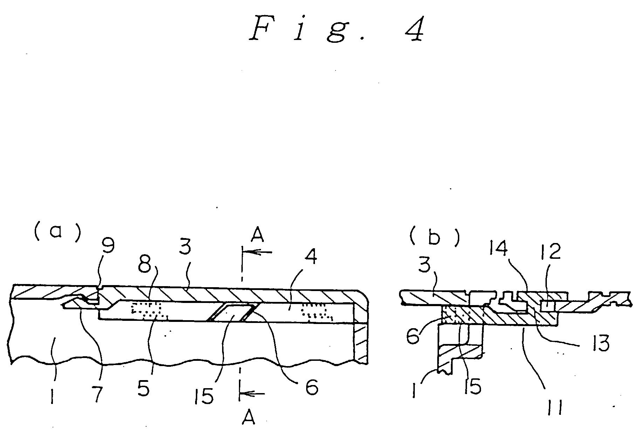

With this structure, when the cover 3 is to be mounted on the opening 1a of the housing 1, the locking piece 11 can be slid from the opening 1a to the withdrawn position in a similar manner to the known structure. Then, while the cover 3 is slid with respect to the opening 1a by utilizing the rib 4 of the cover 3, the cover 3 is inserted. As a result, as illustrated in Figure 4, the engaging piece 5 is engaged with the engaging projection portion 8, and also the engaging piece 7 is engaged with the engaging hole 9. Then the locking piece 11 is slid toward the opening 1a, the locking portion 15 is engaged into the locking groove 6, and the cover 3 is brought into the fixed condition with respect to the housing 1, so that it is possible to avoid the cover 3 from falling off the opening 1a.

On the other hand, when the cover 3 is to be removed from the opening 1a, the locking piece 11 is moved in the direction away from the opening 1a, so that the locking portion 15 is withdrawn from the locking groove 6. Thus, the cover 3 can be removed from the opening 1a by performing a similar operation to the known manner.

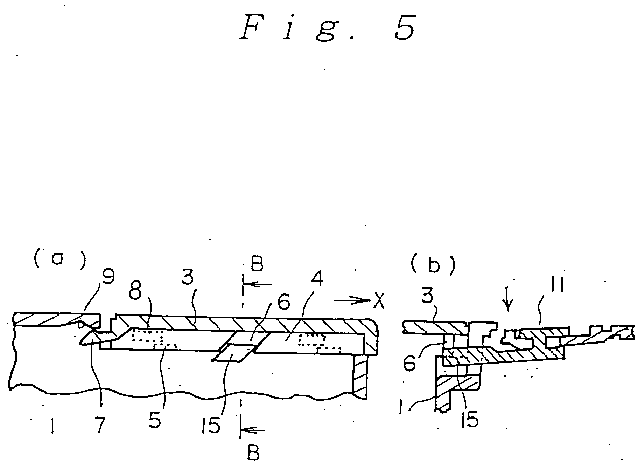

Alternatively, the locking condition may be released by depressing the locking piece 11 downwardly while the locking portion 15 still engages the locking groove 6. As shown in Figure 5 in the cross-sectional view (a) and the sectional view (b) taken along the line B-B of (a), when the locking piece 11 is depressed downwardly, the slide portion 10 for supporting the locking piece 11 is elastically deformed downwardly, with one edge portion 10a thereof being used as a fulcrum. At this time, since both the slide portion 10 and the locking piece 11 are elastically deformed downwardly as an integral unit, the inclined edge portions of the locking portion 15 and the locking groove 6, which are in the form of parallelograms, are brought into an abutting condition. In response to the wedge force exerted by the wedge effect of the inclined edge portions, the rib 4 in which the locking groove 6 is formed, and thus the cover 3, is pushed out along the X direction as seen in Figure 5 at (a). Thus the cover 3 is moved along the removal direction by this operation; the engage piece 7 is released from the engaging condition established with the engaging hole 9.

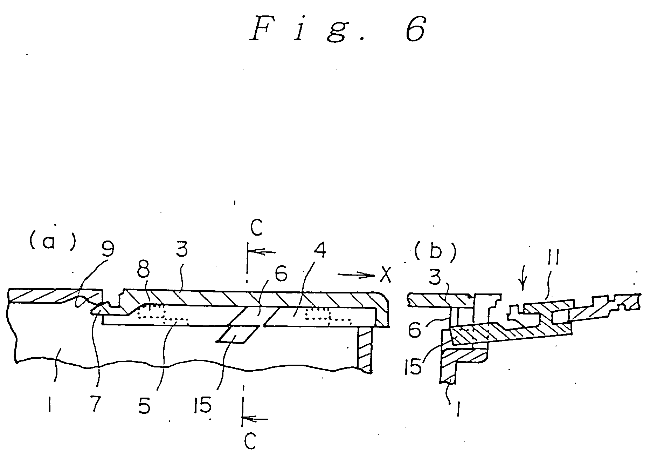

Furthermore, when the locking piece 11 is depressed downwardly, as shown in Figure 6 in the cross-sectional view (a) and the sectional view (b) taken along a line C-C of (a), the cover 3 is transported along the X direction as indicated by an arrow by a distance equivalent to the longitudinal length of the inclined edge thereof. The engaging condition between the engaging piece 5 and the engaging projection portion 8 is also released. Thus, the locking portion 15 is completely removed from the locking groove 6. When the cover 3 is withdrawn under this condition, the cover 3 can be simply removed from the housing 1.

As a consequence, in this structure, both of the locking piece 11 and the operation portion 14 can be made compact because of the arranging space relationship in the housing 1. The sliding operation of the locking piece 11 is no longer necessary when the locking condition is to be released, in which the operation was difficult. Rather, the locking condition can be released only by merely depressing the locking piece 11, resulting in very easy operation.

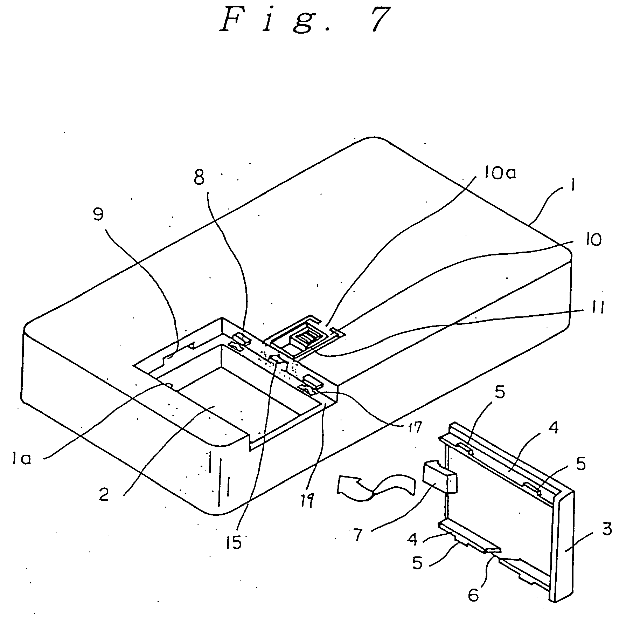

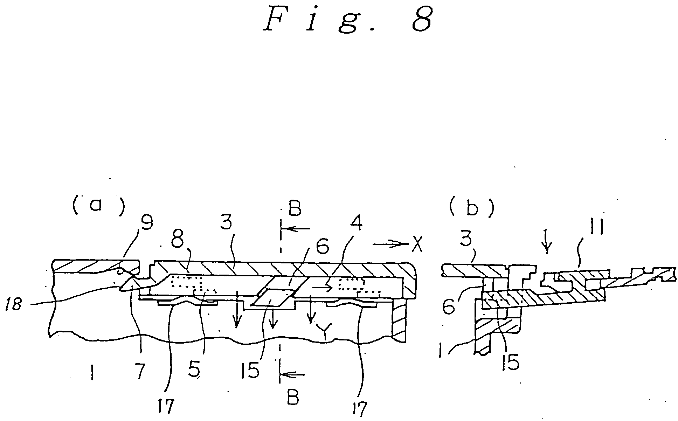

Next, an electronic appliance housing according to another embodiment of the present invention will now be explained with reference to Figures 7 and 8. Figure 7 is a perspective view showing the cover removed in the electronic appliance housing according to another embodiment of the present invention. Figure 8 shows at (a) a cross-sectional view representing such a condition that a lock releasing operation by a locking piece is accomplished and at (b) a sectional view thereof, taken along a line B-B of (a).

The structure shown in Figure 7 is substantially identical to the above-explained structure indicated in Figure 2. A difference between them is that, in the structure shown in Figure 7, a spring 17 used to push the cover upwardly is provided in a bottom portion 19 of the housing to which the cover is mounted. In this case, as one example of the spring 17, there is shown a leaf spring embedded in the bottom of the housing.

When the cover 3 is to be mounted on the housing 1 by the sliding operation, the spring 17 is depressed downwardly. Once the cover 3 is mounted on the housing 1, a pawl 18 of the engaging piece 7 of the cover 3 enters into the engaging hole 9 of the housing 1, so that the cover 3 is retained. Since the cover 3 is pushed upwardly by the spring 17, the upper surface of the engaging piece 5 of the cover 3 is strongly in contact with the lower surface of the engaging projection portion 8 of the housing 1. With this contact, even when the housing 1 is vibrated, there is no possibility that the cover 3 would be vibrated.

On the other hand, when the cover 3 is to be removed by the depression of the operation portion 14, as illustrated at (a) in Figure 8, the cover 3 is similarly depressed along the direction indicated by arrows Y. Consequently, the pawl 18 of the engaging piece 7 is automatically released from the engaging hole 9 of the housing 1. Then, as described above, force is exerted on the cover 3 along the removal direction, so that the cover 3 is slid to be taken out from the housing 1.

Since the spring is employed so as to push up the cover to the housing side, the cover is not easily removed from the housing, but also is not swung even under vibrations. Even if such a structure is employed, the cover can when desired be simply released from the housing by depressing the operation portion.

The above-described embodiments are examples of the application of the present invention to radio paging receivers. However, the present invention is not limited to these embodiments, but may be similarly applied to a portable transceivers or telephones, and other electronic appliances. Also, in these embodiments, the present invention can be applied to battery covers. Alternatively, the present invention may be similarly applied to such a cover structure for closing an opening which is used to store an attachment part in the housing.

As previously described, the edge portions inclined along the cover sliding direction are formed in the locking portion and on the locking piece for bringing the cover into the locking condition, and also engaging the locking portion into the locking groove. When the locking piece under locking state is depressed to be elastically deformed, the force exerted from the wedge effect is produced by receiving the abutting force produced between the locking portion and the inclined portion opposite on the locking groove. As a consequence, the cover can be removed by being slid. Accordingly, when the cover is removed, the locking piece does not need to be slid. Even when the locking piece is made compact, the operability to detach the cover can be improved.

In particular, the locking piece is supported in such a manner that this locking piece can be slid on a portion of the housing, and this portion of the housing may be elastically deformed in combination with the locking piece along the plate thickness direction of the housing by way of the slit formed around this portion. As a result, the locking condition can be maintained while the locking piece is supported on the housing. On the other hand, the locking piece may be elastically deformed toward the inside of the housing.

When both of the locking piece and a portion of the housing are elastically deformed by a preselected amount, it is so constructed that the locking portion is released from the notch edge of the locking groove and moves outside this locking groove. Therefore, when the locking piece is elastically deformed by a preselected amount, the engaging condition between the locking portion and the locking groove is released, without sliding the locking piece, so that the cover may be removed.

While this invention has been described in connection with certain preferred embodiments, it is to be understood that the subject matter encompassed by way of this invention is not to be limited to those specific embodiments.

## Claims

1. An electronic appliance housing, comprising a housing (1) having a storage portion (1a); and a slidable cover (3) slidably mounted over the storage portion of the housing; the housing further including an operation portion (14) equipped with a locking portion (15) which is slidable in a direction substantially perpendicular to the sliding direction of the cover, and means (10a,16) permitting the locking portion to move in a direction substantially perpendicular to the sliding directions of the cover and the locking portion; and the cover including a locking groove (6) for engagement by the locking portion; characterised in that the locking portion and/or the locking groove have at their engaging portion an engaging face which is inclined with respect to the direction of sliding of the cover.

2. An electronic appliance housing as claimed in claim 1, wherein the sectional shape of the locking portion (15) is a parallelogram.

3. An electronic appliance housing as claimed in claim 1, wherein the movement permitting means contains an elastically deformable portion (10a) in said housing, to which the operation portion is mounted.

4. An electronic appliance housing as claimed in claim 3, wherein the housing further includes a slit (16) between the portion to which the operation portion is mounted, and the rest of the housing.

5. An electronic appliance housing as claimed in claim 1, wherein the movement permitting means includes a resiliently deformable member (17) arranged between the housing and the operation portion.

6. An electronic appliance housing as claimed in claim 5, wherein the resiliently deformable member is a leaf spring.

7. An electronic appliance housing as claimed in claim 5, wherein the resiliently deformable member is a coil spring.

8. An electronic appliance housing as claimed in claim 1, wherein the housing further includes a bottom portion (19), and an engaging projection (8) provided above the bottom portion; and the cover further includes a slidable engaging piece (5) arranged between the said bottom portion and the engaging projection portion when the cover is in place.

9. An electronic appliance housing as claimed in claim 8, wherein the cover further includes an engaging piece (7) with a pawl (18) at a tip portion thereof along the sliding direction; and the housing further includes an engaging hole (9) engaging with the engaging piece.

10. An electronic appliance housing as claimed in claim 9, wherein the bottom portion includes biasing means (17) for biasing the cover upwardly when the cover is in place.

11. An electronic appliance housing as claimed in claim 10, wherein the biasing means is a leaf spring.

12. An electronic appliance housing as claimed in claim 1, wherein the storage portion contains a portion used to store therein a cell.

13. An electronic appliance housing as claimed in claim 1, wherein the storage portion contains a portion used to store therein a battery.

14. A portable telephone comprising an electronic appliance housing as recited in any of claims 1 to 13.

15. A radio paging receiver comprising an electronic appliance housing as recited in any of claims 1 to 13.

## Patentansprüche

1. Elektronisches Gerätegehäuse mit einem Gehäuse (1) mit einem Aufbewahrungsabschnitt (1a) und einem schiebbaren Deckel (3), der schiebbar über dem Aufbewahrungsabschnitt des Gehäuses angeordnet ist; wobei das Gehäuse ferner aufweist: einen Betätigungsabschnitt (14), der mit einem Verriegelungsabschnitt (15) ausgerüstet ist, der in eine im wesentlichen senkrechte Richtung zu der Schieberichtung des Deckels schiebbar ist, und eine Einrichtung (10a, 16), durch die sich der Verriegelungsabschnitt in eine im wesentlichen senkrechte Richtung zu der Schieberichtung des Deckels und des Verriegelungsabschnitts bewegen kann; und wobei der Deckel aufweist: eine Verriegelungsrille (6) zum Eingriff durch den Verriegelungsabschnitt; dadurch gekennzeichnet, daß der Verriegelungsabschnitt und/oder die Verriegelungsrille an ihrem Eingriffsabschnitt eine Eingriffsfläche haben, die gegenüber der Schieberichtung des Deckels geneigt ist.

2. Elektronisches Gerätegehäuse nach Anspruch 1, wobei die Schnittform des Verriegelungsabschnitts (15) ein Parallelogramm ist.

3. Elektronisches Gerätegehäuse nach Anspruch 1, wobei die bewegungsermöglichende Einrichtung einen elastisch verformbaren Abschnitt (10a) in dem Gehäuse enthält, an dem der Betätigungsabschnitt angeordnet ist.

4. Elektronisches Gerätegehäuse nach Anspruch 3, wobei das Gehäuse ferner einen Schlitz (16) zwischen dem Abschnitt, an dem der Betätigungsabschnitt angeordnet ist, und dem Rest des Gehäuses aufweist.

5. Elektronisches Gerätegehäuse nach Anspruch 1, wobei die bewegungsermöglichende Einrichtung ein federnd verformbares Teil (17) aufweist, das zwischen dem Gehäuse und dem Betätigungsabschnitt angeordnet ist.

6. Elektronisches Gerätegehäuse nach Anspruch 5, wobei das federnd verformbare Teil eine Blattfeder ist.

7. Elektronisches Gerätegehäuse nach Anspruch 5, wobei das federnd verformbare Teil eine Schraubenfeder ist.

8. Elektronisches Gerätegehäuse nach Anspruch 1, wobei das Gehäuse ferner einen Bodenabschnitt (19) und einen Eingriffsvorsprungabschnitt (8) aufweist, der über dem Bodenabschnitt vorgesehen ist; und der Deckel ferner ein schiebbares Eingriffsstück (5) aufweist, das zwischen dem Bodenabschnitt und dem Eingriffsvorsprungabschnitt angeordnet ist, wenn sich der Deckel an seiner Verwendungsstelle befindet.

9. Elektronisches Gerätegehäuse nach Anspruch 8, wobei der Deckel ferner ein Eingriffsstück (7) mit einer Klinke (18) an einem Spitzenabschnitt davon in Schieberichtung aufweist; und das Gehäuse ein Eingriffsloch (9) aufweist, das einen Eingriff mit dem Eingriffsstück herstellt.

10. Elektronisches Gerätegehäuse nach Anspruch 9, wobei der Bodenabschnitt eine Vorspanneinrichtung (17) zum Vorspannen des Deckels nach oben aufweist, wenn sich der Deckel an seiner Verwendungsstelle befindet.

11. Elektronisches Gerätegehäuse nach Anspruch 10, wobei die Vorspanneinrichtung eine Blattfeder ist.

12. Elektronisches Gerätegehäuse nach Anspruch 1, wobei der Aufbewahrungsabschnitt einen Abschnitt enthält, der zum Aufbewahren einer Zelle darin verwendet wird.

13. Elektronisches Gerätegehäuse nach Anspruch 1, wobei der Aufbewahrungsabschnitt einen Abschnitt enthält, der zum Aufbewahren einer Batterie darin verwendet wird.

14. Tragbares Telefon mit einem elektronischen Gerätegehäuse nach einem der Ansprüche 1 bis 13.

15. Funkrufempfänger mit einem elektronischen Gerätegehäuse nach einem der Ansprüche 1 bis 13.

## Revendications

1. Boîtier de dispositif électronique comprenant un boîtier (1) comportant une partie de stockage (1a) et un couvercle coulissant (3) monté de façon coulissante au-dessus de la partie de stockage du boîtier, le boîtier incluant en outre une partie d'actionnement (14) munie d'une partie de verrouillage (15) qui peut coulisser suivant une direction sensiblement perpendiculaire à la direction de coulissement du couvercle et des moyens (10a, 16) permettant à la partie de verrouillage de se déplacer suivant une direction sensiblement perpendiculaire aux directions de coulissement du couvercle et de la partie de verrouillage ; et le couvercle incluant une gorge de verrouillage (6) destinée à coopérer avec la partie de verrouillage, caractérisé en ce que la partie de verrouillage et/ou la gorge de verrouillage comportent, au niveau de leur partie de coopération, une face de coopération qui est inclinée par rapport à la direction de coulissement du couvercle.

2. Boîtier de dispositif électronique selon la revendication 1, dans lequel la forme en coupe de la partie de verrouillage (15) est un parallélogramme.

3. Boîtier de dispositif électronique selon la revendication 1, dans lequel les moyens de permission de déplacement contiennent une partie déformable élastiquement (10a) dans ledit boîtier sur laquelle la partie d'actionnement est montée.

4. Boîtier de dispositif électronique selon la revendication 3, dans lequel le boîtier inclut en outre une fente (16) entre la partie sur laquelle la partie d'actionnement est montée et le reste du boîtier.

5. Boîtier de dispositif électronique selon la revendication 1, dans lequel les moyens de permission de déplacement incluent un élément déformable élastiquement (17) agencé entre le boîtier et la partie d'actionnement.

6. Boîtier de dispositif électronique selon la revendication 5, dans lequel l'élément déformable élastiquement est un ressort à lame.

7. Boîtier de dispositif électronique selon la revendication 5, dans lequel l'élément déformable élastiquement est un ressort hélicoïdal.

8. Boîtier de dispositif électronique selon la revendication 1, dans lequel le boîtier inclut en outre une partie de fond (19) et une protubérance de coopération (8) prévue au-dessus de la partie de fond et le couvercle inclut en outre un élément de coopération coulissant (5) agencé entre ladite partie de fond et la partie de protubérance de coopération lorsque le couvercle est en place.

9. Boîtier de dispositif électronique selon la revendication 8, dans lequel le couvercle inclut en outre un élément de coopération (7) muni d'un cliquet (18) au niveau de sa partie d'extrémité suivant la direction de coulissement et le boîtier inclut en outre un trou de coopération (9) qui coopère avec l'élément de coopération.

10. Boîtier de dispositif électronique selon la revendication 9, dans lequel la partie de fond inclut des moyens de poussée (17) pour pousser le couvercle vers le haut lorsque le couvercle est en place.

11. Boîtier de dispositif électronique selon la revendication 10, dans lequel les moyens de poussée sont un ressort à lame.

12. Boîtier de dispositif électronique selon la revendication 1, dans lequel la partie de stockage contient une partie utilisée pour stocker dedans une cellule.

13. Boîtier de dispositif électronique selon la revendication 1, dans lequel la partie de stockage contient une partie utilisée pour stocker dedans un accumulateur.

14. Téléphone portable comprenant un boîtier de dispositif électronique selon l'une quelconque des revendications 1 à 13.

15. Récepteur de recherche de personne radio comprenant un boîtier de dispositif électronique selon l'une quelconque des revendications 1 à 13.
